# EUROPEAN PATENT APPLICATION

(11) **EP 4 579 825 A1**
(43) Date of publication of application: **02.07.2025**
(21) Application number: 23220860.3
(22) Date of filing: 29.12.2023
(51) Int. Cl.: H01M 8/04089, H01M 8/04223, H01M 8/04537, H01M 8/04746, H01M 8/0662

(54) **SYSTEMS AND METHODS FOR OPERATING A FUEL CELL SYSTEM HAVING AN INERT GAS GENERATING SUB-SYSTEM**

(71) Applicant: VOLVO TRUCK CORPORATION, 405 08 Göteborg (SE)
(72) Inventor: BLOMGREN, Fredrik, 425 35 Kärra (SE); HINDI, Gustavo, 449 50 Alafors (SE); LUNDGREN, Staffan, 438 53 Hindås (SE)
(74) Representative: Valea AB

(57) **Abstract**

Systems and methods for controlling operation of a fuel cell system comprising a fuel cell unit that comprises a fuel cell stack comprising a cathode and an anode, a cathode recirculation passage configured to divert a cathode exhaust flow to a cathode inlet line when reduction in oxygen partial pressure in an air flow fed to the cathode via the cathode inlet line is required, and an inert gas generating system configured to generate an inert gas to be supplied to the cathode inlet line when further reduction in oxygen partial pressure in the air flow is required. When the fuel cell system is or is expected to be operating with a reduced power demand, a value of a power output that is requested from the fuel cell system is compared to at least one threshold power level to determine whether to divert the cathode exhaust flow and/or the inert gas to the cathode inlet line.

## Description

### TECHNICAL FIELD

The disclosure relates generally to operating a fuel cell system when a power output requested from the fuel cell system is reduced. The disclosure relates to the fuel cell system, a control system for the fuel cell system, a fuel cell vehicle, and methods implemented therein for controlling operation of the fuel cell system in a low power mode.

The disclosure can be applied in heavy-duty vehicles, such as trucks, buses, and construction equipment, as well as in gensets.

### BACKGROUND

A fuel cell is an electro-chemical device that includes an electrolyte sandwiched between two electrodes such as an anode and a cathode. Solid polymer electrolyte fuel cells, which employ a proton exchange membrane (PEM), generate electric power or energy via electrochemical reaction between fuel, such as hydrogen gas received at the anode or anode side, and oxidant, such as oxygen or air received at the cathode or cathode side. PEM fuel cells are considered well suitable for vehicular applications as well as for stationary applications employing fuel cell systems. Two or more fuel cells are usually arranged together into a fuel cell stack, in order to provide a higher output voltage. One or more fuel cell stacks may form a fuel cell unit, and a fuel cell system may include one or more fuel cell units.

In fuel cells, metals such as e.g. palladium and platinum are used as catalysts to promote the electrochemical reaction between the hydrogen gas and the air or oxygen, wherein the reaction occurs across the membrane or electrolyte. A supporting structure made of a catalyst support material, such as carbon, is configured to support the membrane which may be coated with a metal-based catalysts on both sides. A condition of the catalysts and the support material defines durability, lifetime, and performance of the fuel cell system. The catalysts need to operate within certain conditions to result in effective reaction rates. Thus, an excessive increase in a single cell voltage may lead to degradation of the catalysts and support material, wherein the single cell voltage can be defined as a cell voltage of every fuel cell in every fuel cell stack in a fuel cell unit of the fuel cell system, where all of the fuel cells are considered to operate as a single cell. Accordingly, during operation of the fuel cell system, it is desirable to maintain the single cell voltage, also referred to as a single cell potential, below a certain voltage level.

In fuel cell systems with higher power, which are gaining increasing attention in automotive and other areas, there is an issue that arises at low loads on a fuel cell system. In particular, the single cell potential can reach a safe threshold at higher power levels of the fuel cell system. Thus, as the power of the fuel cell system decreases, the single cell potential may increase to values that negatively affect the condition of the catalysts and carbon support material. Accordingly, it may be challenging to control the fuel cell system at lower loads in a manner that takes into consideration potential degradation of the catalysts and the support material.

During vehicle idling, a battery of the vehicle may be charged with excess power produced by the fuel cell system. However, in cases when the battery is e.g. fully charged and cannot accept a power surplus, a decision may need to be made regarding whether to dissipate the excess power produced by the fuel cell system to heat or whether to shut down the fuel cell system. But releasing the power as heat, e.g. into an ambient environment, is wasteful; and each fuel cell system shutdown event contributes to a faster degradation of the fuel cell system.

Various methods have been proposed for reducing a single cell potential at decreased power demands from the fuel cell system. However, there remains a need for improved methods for controlling operation of the fuel cell system at decreased power demands on the fuel cell system.

### SUMMARY

Aspects of the present disclosure relate to control of a fuel cell system at low loads when power demand on the fuel cell system decreases, in a manner that limits the single cell voltage or potential to values lower than 0.8V. This allows avoiding degradation of the catalyst and the support material. The fuel cell system may be deployed in a fuel cell vehicle or in a stationary application.

In aspects in accordance with the present disclosure, the fuel cell system is intentionally made less efficient, to decrease a power output of the fuel cell system during vehicle idling or other low-power events. In this way, the single cell voltage is reduced, whereby a risk of the degradation of the catalysts and the supporting material is reduced. In examples in accordance with the present disclosure, a cathode exhaust flow produced by the cathode is diverted, or recirculated, back into a cathode inlet or input line. Additionally, an inert gas generating system, which may be associated with the fuel cell system, may be used to produce a controlled amount of an inert gas that may allow be supplied to the cathode inlet line. In this way, an oxygen partial pressure in an air flow supplied to the cathode will be reduced thereby reducing the single cell potential.

In an aspect, a fuel cell system for a vehicle is provided. The fuel cell system comprises at least one fuel cell unit comprising a fuel cell stack that comprises a cathode side, an anode side, an inert gas generating system, and a control system. The cathode side is configured to receive an air flow via a cathode inlet line and configured to provide a cathode exhaust flow via a cathode outlet line, the cathode outlet line being fluidly coupled to a cathode recirculation passage configured to divert a portion of the cathode exhaust flow to the cathode inlet line. The inert gas generating system is configured to generate inert gas that is supplied to the cathode inlet line. The anode side is configured to receive a hydrogen gas flow via an anode feed line, the anode feed line being configured to be in fluid communication with an anode inlet line configured to supply the hydrogen gas flow to the anode side and with an anode bypass line that is configured to divert a portion of the hydrogen gas flow to the inert gas generating system. The control system comprises processing circuitry that is configured to determine that the fuel cell system has been or will be operating with a reduced power demand from the fuel cell system for a period of time that is longer than a threshold period of time; responsive to determining that the fuel cell system has been or will be operating with the reduced power demand, comparing a value of the power output that is requested from the fuel cell system to at least one threshold power level; responsive to determining that the value of the power output is below the at least one threshold power level comprising a first threshold power level and above the at least one threshold power level comprising a second threshold power level, controlling the cathode recirculation passage to divert a portion of the cathode exhaust flow into the cathode inlet line; and responsive to determining that the value of the power output is below the second threshold power level, control a cathode bypass loop in fluid communication with the cathode recirculation passage to divert a portion of the cathode exhaust flow to the inert gas generating system or control an air flow bypass line in fluid communication with the cathode inlet line to divert a portion of the air flow to the inert gas generating system, and control the anode bypass path to divert a portion of the hydrogen gas flow to the inert gas generating system to thereby cause the inert gas generating system to generate a controlled amount of the inert gas.

The technical benefits include controlling the fuel cell system in a manner that allows reducing the power demand or load on the fuel cell system as required, while avoiding a risk that a single cell potential increases to values that are above the safety threshold of 0.8V. The efficiency of the fuel cell system is intentionally decreased by decreasing the oxygen partial pressure in the cathode inlet flow such as an air flow in a controller manner. To decrease the oxygen partial pressure, reactants that are already present in the fuel cell system are used, in addition to an inert gas generating system comprising a catalyst that can generate an inert gas such as e.g. water vapor. The fuel cell system becomes less efficient meaning that its output power may be reduced to lower values without the single cell voltage of the stacks increasing to above 0.8V. Accordingly, the system of the present disclosure provides an improved control of the fuel cell system at low power demands, in the manner that avoids causing degradation of the catalysts and the support material of the fuel cell stack of the fuel cell system.

In some examples, the fuel cell system may be determined to have been or will be operating with the reduced power demand when the vehicle is in an idle mode.

In some examples, the processing circuitry of the control system may be configured to, responsive to determining that the value of the power output is below the second threshold power level, control the cathode bypass passage to divert the portion of the cathode exhaust flow to the inert gas generating system and control the anode bypass path to divert the portion of the hydrogen gas flow to the inert gas generating system whereby the inert gas generating system is caused to generate the controlled amount of the inert gas in dependence on the value of the power output.

In some examples, the processing circuitry of the control system may further be configured to control the cathode recirculation passage to divert a portion of the cathode exhaust flow into the cathode inlet line.

In some examples, the processing circuitry of the control system may be configured to, responsive to determining that the value of the power output is below the second threshold power level, control the air flow bypass line to divert the portion of the air flow to the inert gas generating system and control the anode bypass path to divert the portion of the hydrogen gas flow to the inert gas generating system whereby the inert gas generating system is caused to generate the controlled amount of the inert gas in dependence on the value of the power output.

In some examples, the determining that the fuel cell system has been or will be operating with the reduced power demand for the period of time that is longer than the threshold period of time is performed in dependance on one or more features of a route traveled by the vehicle.

In some examples, as the fuel cell system is no longer operating with the reduced power demand and/or as an increased amount of power is requested from the fuel cell system, the fuel cell system may be controlled to increase an oxygen partial pressure in the cathode inlet line.

Thus, in some examples, the processing circuitry of the control system may be configured to determine that the fuel cell system is no longer operating with the reduced power demand and the value of the power output requested from the fuel cell system is greater than the at least one threshold power. The processing circuitry of the control system may also be configured to, responsive to determining that the value of the power output is greater than the at least one threshold power, control the inert gas generating system to supply a reduced amount of the inert gas to the cathode inlet line, control the cathode bypass line to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the inert gas generating system; and, as the value of the power output is reducing further, and as the inert gas generating system ceases supplying the inert gas to the cathode inlet line, control the cathode bypass line to cease diverting the cathode exhaust flow to the catalyst system and control the anode bypass path to cease diverting the hydrogen gas flow to the inert gas generating system.

In some examples, the processing circuitry may be further configured to control the cathode recirculation passage to gradually cease diverting the cathode exhaust flow into the cathode inlet line.

In some examples, a fuel cell vehicle comprising a fuel cell system in accordance with examples of the present disclosure is provided.

In an aspect, a method for operating a fuel cell system for a vehicle is provided. The fuel cell system comprises at least one fuel cell unit comprising a fuel cell stack that comprises a cathode side configured to receive an air flow and to provide a cathode exhaust flow, and an anode side configured to receive a hydrogen gas flow. The method comprises determining that the fuel cell system has been or will be operating with a reduced power demand from the fuel cell system for a period of time that is longer than a threshold period of time; responsive to determining that the fuel cell system has been or will be operating with the reduced power demand, comparing a value of the power output that is requested from the fuel cell system to at least one threshold power level; responsive to determining that the value of the power output is below the at least one threshold power level comprising a first threshold power level and above the at least one threshold power level comprising a second threshold power level, decreasing an oxygen partial pressure of the air flow in a cathode inlet line configured to supply the air flow to the cathode, by diverting a portion of the cathode exhaust flow into the cathode inlet line; and, responsive to determining that the value of the power output is below the second threshold power level, decreasing the oxygen partial pressure of the air flow in the cathode inlet line by controlling an inert gas generating system of the fuel cell system to generate an inert gas that is supplied into the cathode inlet line to thereby further decrease the oxygen partial pressure of the air flow in the cathode inlet line.

In some examples, the controlling the inert gas generating system to generate the inert gas comprises diverting a portion of the cathode exhaust flow to the inert gas generating system, and diverting a portion of a hydrogen gas to the inert gas generating system.

In some examples, the method may comprise, responsive to determining that the value of the power output is below the second threshold power level, divert a portion of the cathode exhaust flow into the cathode inlet line.

In some examples, the controlling the inert gas generating system to generate the inert gas comprises diverting a portion of the air flow to the inert gas generating system, and diverting a portion of a hydrogen gas to the catalyst system.

In some examples, the method may comprise determining that the fuel cell system is no longer operating with the reduced power demand and the value of the power output requested from the fuel cell system is greater than the at least one threshold power; responsive to determining that the value of the power output is greater than the at least one threshold power, controlling the inert gas generating system to supply a reduced amount of the inert gas to the cathode inlet line, control the cathode bypass line to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the inert gas generating system; and, as the value of the power output is reducing further, and as the inert gas generating system ceases supplying the inert gas to the cathode inlet line, controlling (608) the cathode bypass line to cease diverting the cathode exhaust flow to the catalyst system and control the anode bypass path to cease diverting the hydrogen gas flow to the inert gas generating system.

The technical benefits of the method comprise similar benefits to those described above in connection with the fuel cell system. Accordingly, the method of the present disclosure provides an improved control of the fuel cell system at low power demands, in the manner that avoids causing degradation of the catalysts and the support material of the fuel cell stack of the fuel cell system.

A lower value of the power output requires a lower oxygen partial pressure of the air flow.

In an aspect, a control system for controlling a fuel cell system of a fuel cell vehicle is provided. The control system comprises processing circuitry configured to perform the method in accordance with examples of the present disclosure.

In an aspect, a fuel cell vehicle is provided that comprises the control system and/or that is in communication with the control system in accordance with examples of the present disclosure.

In an aspect, a computer program product is provided that comprises computer-executable instructions, which, when executed by processing circuitry, cause the processing circuitry to perform the method in accordance with any aspects and examples of the present disclosure. The processing circuitry may be, e.g., processing circuitry of the control system.

In an aspect, a computer-readable storage medium is provided that has stored thereon a computer program product comprising computer-executable instructions which, when executed by processing circuitry, cause the processing circuitry to perform the method in accordance with any aspects and examples of the present disclosure. The processing circuitry may be, e.g., processing circuitry of the control system.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a vehicle comprising a fuel cell system in which a method in accordance with examples of the present disclosure may be implemented.
**FIG. 2A** is a block diagram illustrating a fuel cell system and a control system, in which a method in accordance with examples of the present disclosure may be implemented.
**FIG. 2B** is a block diagram illustrating a fuel cell system and a control system, in which a method in accordance with examples of the present disclosure may be implemented.
**FIG. 3** is a block diagram illustrating an example of a fuel cell system of FIG. 2A.
**FIG. 4** is a block diagram illustrating another example of a fuel cell system of FIG. 2A.
**FIG. 5** is a flowchart illustrating a method for operating a fuel cell system, in accordance with an example.
**FIG. 6** is a flowchart illustrating a method for operating a fuel cell system, in accordance with an example.
**FIGs. 7A** and **7B** are schematic block diagrams illustrating examples of a control system for a fuel cell system, in accordance with an example.

### DETAILED DESCRIPTION

In a fuel cell system, at low loads, a single cell voltage may reach a safety threshold at power levels that are higher than desirable, e.g., already at 50kW in some cases. For example, in some cases, once the fuel cell system enters an idle mode or state at low loads i.e. low current densities, the single cell voltage may reach the safety threshold quickly. The fuel cell system may be in the idle mode when, e.g., a vehicle including the fuel cell system is in an idle mode. Thus, although a further reduction in power produced by the fuel cell may be required, this task may become challenging due to the raising single cell voltage. This makes it challenging to properly operate the fuel cell system at low loads without a risk of damaging the catalysts and the support material of fuel cell stacks.

Accordingly, to control catalyst degradation and thereby control the fuel cell system lifetime, it is desirable to limit a maximum value that the single cell voltage may reach at low current densities at the fuel cell system. When the single cell voltage, also interchangeably referred to as single cell potential, increases to a value of 0.8V or above 0.8V, platinum dissolution starts to occur thereby reducing an electrochemical surface area (ECSA), which in turn leads to reduction of efficiency and lifetime of the fuel cell system. Thus, if the maximum value that the single cell voltage is allowed to reach is set to 0.8V or just below 0.8 e.g. 0.79V, a risk of degradation of the catalysts and the support material may be reduced or avoided.

Solutions have been used which involve, e.g., a stop/start strategy such that a fuel cell system may be shut down when a single cell voltage reaches 0.8V. For example, when a power demanded from the fuel cell system falls below a certain value e.g. 50kW in some scenarios, the fuel cell system may be shut down. A drawback of such approaches is that frequent stops and starts of the fuel cell system induce other degradation mechanisms such as carbon corrosion in the catalyst support material. Thus leads to reduction of the platinum and thus the reduction of the ECSA, which causes a structure of the catalyst to collapse and thus increases mass transport losses. Thus, stop/start strategies may negatively impact the efficiency and lifetime of the fuel cell system.

The methods and systems of the present disclosure employ a control strategy which involves the use of a cathode recirculation loop or passage which recirculates a cathode exhaust flow back into a cathode inlet line configured to deliver an air flow to the cathode, in order to reduce an oxygen partial pressure in the air flow fed to the cathode inlet line. The control strategy may also involve generating an inert gas that may be fed into the inlet of the cathode, in addition to the cathode exhaust flow being provided to the cathode inlet line. Depending on a configuration of the fuel cell system, the inert gas is generated by an inert gas generating system configured to generate the inert gas using either a portion of the cathode exhaust flow that is diverted to the inert gas generating system or using a portion of the air flow that is acquired from e.g. from the ambient environment. The inert gas generating system is configured to also receive a portion of a hydrogen gas flow which portion is diverted from the hydrogen gas flow fed to the anode. The dilution of the air flow in the cathode inlet line with the inert gas results in further reduction of the oxygen partial pressure in the air flow.

The supply of the cathode exhaust flow into the cathode inlet line, and in some cases additional generation of the inert gas also supplied into the cathode inlet line, are performed responsive to determining that the vehicle has been or will be operating with the reduced power demand, and based on a power level that is requested from the fuel cell system at the reduced power demand. As the requested power is reduced, a higher amount of the inert gas may be required to further reduce the oxygen partial pressure in the air flow fed to the cathode inlet line. In this way, the fuel cell system is purposefully made to be less efficient, which however advantageously allows an improved operation of the fuel cell system at low loads, in the manner such that the single cell potential does not increase above a safety threshold i.e. 0.8V. Another advantage is that, because of the reduced efficiency of the fuel cell system, the amount of the excess power produced by the fuel cell system is reduced. Thus, even if an energy storage system (ESS) of the fuel cell system is not capable of accepting excess power produced by the fuel cell system at low loads, fewer or no power is wasted as a heat. Furthermore, a shutdown of the fuel cell system may be avoided, which increases a durability and a lifetime of the fuel cell system. Accordingly, the systems and methods of the present disclosure advantageously provide an improved control of the fuel cell system at low power demands.

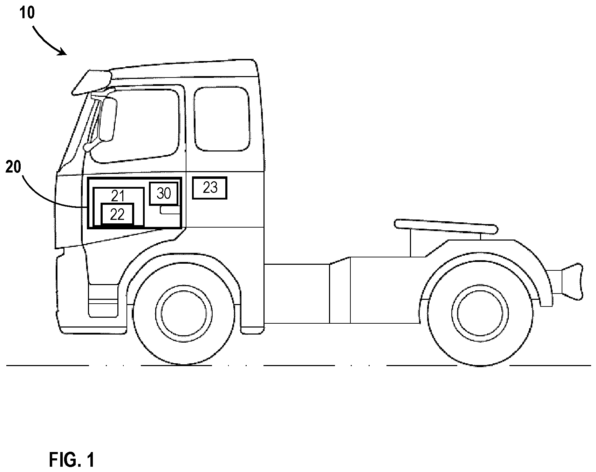

**FIG. 1** depicts a side view of a vehicle 10 according to an example of the present disclosure. The vehicle 10 is shown as a truck, such as a heavy-duty truck for towing one or more trailers (not shown). The vehicle 10 may be a fuel cell electric vehicle (FCEV) or a hybrid vehicle. It should be appreciated that the present disclosure is not limited to any other specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the vehicle 10 comprises a fuel cell system 20 comprising a fuel cell unit 21 that comprises one or more fuel cell stacks 22. The fuel cell system 20 may be used for powering one or more electric drive motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's power to another piece of equipment. The vehicle 10 may include or be coupled to or associated with one or more PTO devices.

The fuel cell unit 21 of the fuel cell system 20 comprises one or more fuel cell stacks 22 each comprising one or more fuel cells. In examples herein, the fuel cell unit 21 may comprise multiple fuel cell stacks 22, and any mention of the fuel cell stack 22 applies to two or more fuel cell stacks. The fuel cell system and/or the fuel cell unit 21 are arranged to provide the fuel cells with necessary supply of hydrogen fuel (H₂), oxidant such as air, cooling, heating, etc. The fuel cell system 20 may include various components which are not shown in FIG. 1. In some examples, the fuel cell system 20 may comprise more than one fuel cell unit 21, and each fuel cell unit may comprise its own controller system, which may be communicatively connected to a controller or control system configured to control the fuel cell system 20.

The fuel cell system 20 may comprise a single fuel cell system, two fuel cell systems, or more than two fuel cell systems, such as three or more fuel cell systems. Furthermore, when several fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state. Two fuel cell systems may in some cases be controlled in dependence on one another, such that one of the fuel cell systems is controlled to an on-state or an off-state in dependence on the state of the other fuel cell system(s).

The vehicle 10 further comprises a control device or control system 30 according to examples of the present disclosure. The control system 30 may be used for controlling the fuel cell system 20. The control system 30 may be part of the fuel cell system 20 or the control system 30 may be separate from the fuel cell system 20. In some implementations, the control system 30 may be part of a main vehicle controller (not shown). In some examples, the control system 30 may be a combination of an on-board and off-board control system or systems. The control system 30 may be configured to control the fuel cell system 20 e.g. the one or more fuel cell units 21 by issuing control signals and by receiving status information relating to the fuel cell system 20. The control system 30 may be configured to receive information from various sensors, including one or more of temperature sensors, moisture sensors, voltage sensors, and other sensors included in or associated with the fuel cell system 20 and/or the vehicle 10. For example, one or more voltage sensors may be included in the fuel cell unit 21 to monitor voltage of the fuel cell stacks. Various other sensors may acquire measurements regarding operation of components of the fuel cell system 20.

The control system 30 may be communicatively coupled to an internal database, an external database, or a combination thereof, to receive data related to, e.g., a route traveled or to be traveled by the vehicle. The data related to the route may include a start point, an end point, and a path traveled by the vehicle 10 between the start and end points. The control system 30 may store and/or may have access to data related to the route including terrain information, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on predicted weather conditions, and other types of data. The control system 30 may have data on a vehicle current location as well as locations expected to be traveled by the vehicle along the route.

The control system 30 is an electronic control unit and may comprise processing circuitry which is adapted to execute a computer program such as computer-executable instructions to perform a method according to aspects of the present disclosure. The control system 30 may comprise hardware and/or software for performing the method according to aspects of the present disclosure. The control system 30 may be denoted a computer. The control system 30 may be constituted by one or more separate sub-units, and the control system 30 may communicate by use of wired and/or wireless communication technology.

As shown in FIG. 1, the vehicle 10 comprises an energy storage system (ESS) 23 such as e.g. one or more batteries and/or one or more supercapacitors for storing electric energy, including excess electric energy produced by the fuel cell system 20. The ESS 23 may store energy regenerated during braking such as regenerative braking, and/or it may be configured for being charged by a charger, such as, e.g., from an external power grid. The ESS 23 is configured to assist the fuel cell system 20 in supplying energy to a drive motor, to meet power/energy demands of the vehicle 10. The ESS 23 may be configured to provide additional power in situations when the complete required power cannot be provided by fuel cell system 20, or when it is not suitable to provide the complete required power by the fuel cell system 20. In various examples, the ESS 23 may provide electrical energy storage for electrical energy that is generated by the fuel cell system at low loads, assist the fuel cell system 20 with generating power at higher loads, or may serve as a main energy supplier in some circumstances. The fuel cell system 20 and the ESS 23 can provide power to one or more auxiliary systems of the vehicle 10.

The vehicle 10 may also comprise various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts, and marine vehicles. The present disclosure may also be applied in vessels and in stationary applications, such as in grid-connected supplemental power generators or in gridindependent power generators.

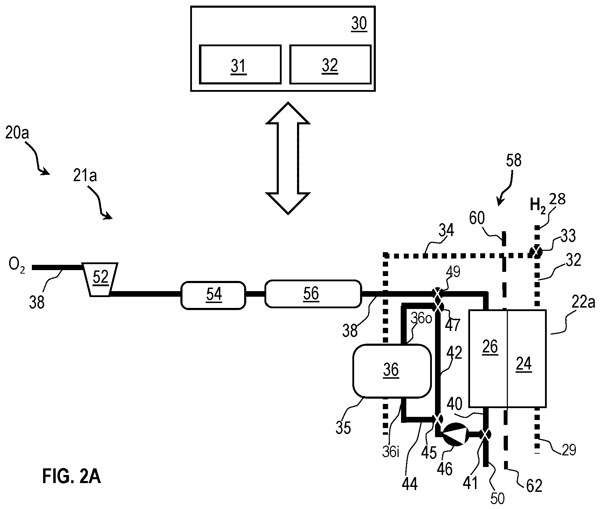

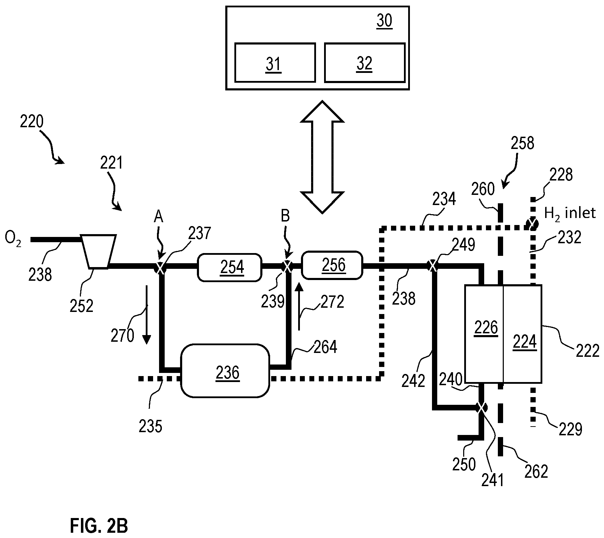

**FIGs. 2A** and **2B** illustrate examples of a fuel cell system that can be deployed in a fuel cell vehicle e.g. vehicle 10 of FIG. 1. FIG. 2A shows a fuel cell system in which an inert gas generating system is fed with a hydrogen gas flow and a cathode exhaust flow delivered or diverted to the inert gas generating system. FIG. 2B, discussed below, shows a fuel cell system in which an inert gas generating system is fed with a hydrogen gas flow and an air flow delivered or diverted to the inert gas generating system.

FIG. 2A illustrates an example of a fuel cell system 20a that can be deployed in a fuel cell vehicle which may be e.g. vehicle 10 of FIG. 1. The fuel cell system 20a may be configured to perform methods in accordance with examples of the present disclosure. In particular, the fuel cell system 20a may be configured to operate such that an oxygen partial pressure in an air flow provided to a cathode is controlled based on a power requested from the fuel cell system 20a, e.g., as the power demand from the fuel cell system 20a decreases. In the fuel cell system 20a, a cathode outlet line is fluidly coupled to a cathode recirculation passage configured to divert a portion of a cathode exhaust flow to a cathode inlet line. The fuel cell system 20a also comprises a cathode bypass loop in fluid communication with the cathode recirculation passage and configured to divert a portion of the cathode exhaust flow to an inert gas generating system.

As shown in FIG. 2A, the fuel cell system 20a comprises a fuel cell unit 21a that comprises a fuel cell stack 22a. The fuel cell unit 21a may include more than one stack. Operation of the fuel cell system 20a may be controlled by a control system 30, also shown in FIG. 1.

The fuel cell stack 22a comprises an anode side or anode 24, a cathode side or cathode 26, and an electrolyte (not shown) such as e.g. a proton exchange membrane (PEM) sandwiched between the anode 24 and the cathode 26. The fuel cell stack 22a is configured to generate power through an electrochemical reaction between a hydrogen gas and an oxidant such as air or oxygen.

The anode or anode side 24 is configured to receive a hydrogen gas flow via an anode feed line 28. The hydrogen gas flow may be supplied e.g. from a hydrogen storage device (not shown) or from any suitable source of hydrogen gas. An anode outlet line 29 may be configured to receive and lead away from the anode 24 byproducts of operation of the anode side 24. The anode feed line 28 is configured to be in fluid communication with an anode inlet line 32 configured to supply the hydrogen gas flow to the anode side 24 and with an anode bypass line 34 that is configured to divert a portion of the hydrogen gas flow to an inert gas generating system 36 that is configured to generate water vapor used as an inert gas. An anode inlet flow control valve 33, shown schematically, is positioned in the anode feed line 28 and may be controlled to allow the portion of the hydrogen gas flow to be diverted from the anode feed line 28 to the inert gas generating system 36. The anode inlet flow control valve 33 may be any suitable flow control valve, and may include one or more valves. The anode inlet flow control valve 33, as well as other valves shown herein and used in accordance with examples of the present disclosure, may be any suitable flow control valves, e.g., three-way proportional valves or other types of valves that are configured to control an amount of a respective flow in a line or path to which the valve is coupled. The anode feed line 28, the anode inlet line 32, the anode bypass line 34, and the anode outlet line 29 are shown as dotted lines in FIG. 2A. Additionally shown by a dotted line is a line 35 indicating that a residual flow of hydrogen 35 may be discharged by the inert gas generating system 36 in cases when the hydrogen gas directed to the system 36 is not fully consumed. This residual hydrogen flow may be directed back to the anode side 24 (which is not shown in FIG. 2A) or vented to the outside environment.

The cathode side 26 is configured to receive air or an air flow e.g. from the ambient environment via a cathode inlet path or line 38. The cathode side 26 is configured to provide a cathode exhaust flow via a cathode outlet path or line 40. The cathode exhaust flow may comprise liquid water and steam produced as byproducts of the electrochemical reaction in the fuel cell stack 22a. The cathode exhaust flow may be carried away from the cathode side 26 e.g. e.g., to outside of the vehicle 10, as shown by a line 50. In some implementations, the liquid water and steam may be processed and reused, at least in part - e.g, liquid water may be extracted from the cathode exhaust flow.

In the example of FIG. 2A, the cathode outlet line 40 is fluidly coupled to a cathode recirculation passage or loop 42 configured to divert a portion of the cathode exhaust flow to the cathode inlet line 38. The cathode recirculation passage or loop 42 may also be referred to as an exhaust gas recirculation (EGR) loop or passage. A configuration of the cathode recirculation passage in accordance with aspects of the present disclosure such as e.g. the cathode recirculation passage 42 may depend on a general layout of the fuel cell system, components used, power level requirements, etc.

In some examples, one or both of the cathode outlet line 40 and the cathode recirculation passage 42 may comprise a water separator or another similar component configured to extract water from the cathode exhaust flow. The presence of one or more water separators is optional and may depend on an amount of liquid water present in the cathode exhaust. In some examples, one or more water separators may be present and they may be selectively activated, e.g. when a need arises to decrease the amount of liquid water in the cathode exhaust flow. It may be desired to provide a drier cathode exhaust into the air flow that is supplied to the cathode.

The fuel cell system 22a also comprises a cathode bypass passage or loop 44 configured to be in fluid communication with the cathode recirculation passage 42 and configured to divert a portion of the cathode exhaust flow to the inert gas generating system 36. Thus, the inert gas generating system 36 is configured to generate the inert gas when the cathode exhaust and the hydrogen gas flows are fed to the system 36. The inert gas generating system 36 may comprise a catalyst, for example, a platinum (Pt) or Palladium (Pd) catalyst, and it is configured to generate an inert gas such as e.g. water, such as water vapor, when oxygen and hydrogen are supplied to the system 36. In some examples, the inert gas generating system 36 comprises a catalytic container, e.g. tank or box, comprising the catalytic material which drives production of water and nitrogen when reacted with hydrogen and oxygen supplied to the container. The amount of the inert gas produced by the inert gas generating system 36 may be directly proportional to the amount of hydrogen gas flown to the system 36.

As shown in FIG. 2A, a cathode outlet flow control valve 41 may be positioned in the cathode outlet line 40 and may be controlled to allow a portion of the cathode exhaust flow to be diverted to the cathode recirculation passage 42. A recirculation pump 46 in the cathode recirculation passage 42 may be configured to pump the cathode exhaust flow through the cathode recirculation passage 42 and also through the cathode bypass loop 44.

As also shown in FIG. 2A by way of example, a first cathode bypass valve 45 may be positioned in the cathode recirculation passage 42 and may be controlled to allow a portion of the cathode exhaust flow to be diverted to pass through the cathode bypass loop 44 that comprises the inert gas generating system 36. A second cathode bypass valve 47 may be positioned in the cathode recirculation passage 42 and may be controlled to allow at least a portion of the inert gas generated by the inert gas generating system 36 to be provided from cathode bypass loop 44, via the cathode recirculation passage 42, and to the cathode inlet line 38. Also, a cathode inlet flow control valve 49 may be positioned in the cathode inlet line 38 and may be controlled to allow the cathode exhaust flow, which may be mixed with the inert gas when the cathode bypass loop 44 is open, to be provided to the cathode inlet line 38, to thereby reduce the oxygen partial pressure in the air flow provided to the cathode side 26. The cathode inlet line 38, the cathode recirculation passage 42, the cathode bypass loop 44, and the cathode output line 50 are shown with solid lines in FIG. 2A.

The air flow for the cathode 26 may be acquired from the ambient environment. The air may be filtered e.g. using a filter and pressurized by an air compressor 52. The air flow may be heated as a result of the compression by the air compressor 52. In some examples, the air compressor 52 may be an electric turbocharger (ETC) comprising a turbine and compressor. The air compressor 52 may be fluidly coupled to a charge air cooler (CAC) 54 that is configured to cool the air flow in the cathode inlet line 38. The air flow may also be humidified by a humidifier 56.

As also shown schematically in FIG. 2A, the fuel cell unit 21a comprises a coolant circuit or system 58 configured to circulate a coolant, referred to as a coolant flow, through the fuel cell unit 21. The coolant system 58 circulates the coolant flow that is flown into the stack 22a via a coolant inlet line 60 and flown out of the stack 22a via a coolant outlet line 62. Although not shown in FIG. 2A, the coolant system 58 may be in the form a loop, such that the coolant outlet line 62 may be in fluid communication with the coolant inlet line 60, for circulating the coolant through the stack 22a. The coolant system 58 may comprise components such as e.g. a radiator, a coolant tank for storing the coolant, a pump circulating the coolant, and/or other components.

Operation of the fuel cell unit 21a may be controlled by the control system 30. In examples herein, as shown in FIG. 2A, the control system 30 may comprise processing circuitry 32 that is configured execute computer-executable instructions that, when executed by the processing circuitry 32, may perform a method in accordance with examples of the present disclosure. The control system 30 also comprises memory 31 that is configured to store the computer-executable instructions and various data.

The processing circuitry 32 of the control system 30 may be configured to determine or estimate that the vehicle has been or will be operating with a reduced power demand from the fuel cell system for a period of time that is longer than a threshold period of time. The processing circuitry 32 may be configured to, responsive to estimating that the vehicle has been or will be operating with the reduced power demand, controlling operation of the fuel cell system 20a so that a portion of the cathode exhaust flow is directed to the cathode inlet line 38. For example, the cathode outlet flow control valve 41 at a point in which the cathode outlet line 40 is coupled to the cathode recirculation passage 42 may be operated to allow the portion of the cathode exhaust flow to be flown through the cathode recirculation passage 42. The first and second cathode bypass valves 45 and 47, positioned at respective points at which the cathode bypass loop 44 is coupled to the cathode recirculation passage 42, may be operated so as to prevent the cathode exhaust flow from being flown through the cathode bypass loop 44, while the cathode exhaust flow is directed through the cathode recirculation passage 42 to the cathode inlet line 38. The cathode inlet flow control valve 49 positioned at a point at which the cathode recirculation passage 42 is coupled with the cathode inlet line 38 may be controlled, e.g., to be partially open, to allow the cathode exhaust flow to be directed to the cathode inlet line 38. Also, the anode inlet flow control valve 33 positioned at a point at which the anode feed line 28 is coupled with the anode bypass line 34 may be controlled, e.g., to be partially open, to allow a portion of the hydrogen gas flow, normally fed to the anode 24, to be diverted to be flown, via the anode bypass line 34, into the inert gas generating system 34.

If further reduction of power requested from the fuel cell system takes place, the processing circuitry 32 may instruct the fuel cell system 20a to generate an inert gas that is directed to the cathode inlet line 38 along with the portion of the cathode exhaust flow. To cause the inert gas generating system 36 to generate the inert gas, the first and second cathode bypass valves 45 and 47, positioned at the respective points at which the cathode bypass loop 44 is coupled to the cathode recirculation passage 42, may be operated so as allow at least a portion of the cathode exhaust flow to flown through the cathode bypass loop 44. The cathode exhaust flow enters the inert gas generating system 36 at an inlet 36i of the inert gas generating system 36 and the inert gas is provided at an output 36o of the inert gas generating system 36, such that a part of the cathode bypass loop 44 carries the inert gas that is supplied to the cathode inlet line 38. It should be noted that, in FIG. 2A, the hydrogen gas flow is shown to enter the inert gas generating system 36 from a side, i.e. from a top as viewed in FIG. 2A, which is opposite to the inlet 36i to the inert gas generating system 36 at which the cathode exhaust flow enters the system 36; but this is only an illustration since the hydrogen gas and the cathode exhaust flow may enter the inert gas generating system 36 from any suitable side, including from the same side, to cause the catalyst of the inert gas generating system 36 to generate the inert gas. The cathode exhaust flow and the hydrogen gas flow may enter the inert gas generating system as co-flows, or cross-flows, or in any other combination.

In some examples, both the cathode exhaust flow from the cathode recirculation passage 42 and the inert gas from the cathode bypass loop 44 are carried to the inert gas generating system 36. Thus, the air flow that is fed to the cathode 26 may be mixed with the cathode exhaust flow and with the inert gas such as e.g., water vapor, whereby the oxygen partial pressure in the air flow decreases in accordance with the required increase in the power requested from the fuel cell system. It should be noted that a cathode inlet or input flow, that is fed to the cathode as source of oxidant for the electrochemical reaction in the fuel cell stack, is referred to as an air flow even when the air flow e.g. as acquired from the ambient environment is mixed with the cathode exhaust and/or with the inert gas. This notation is used for description purposes, but it should be appreciated that the air flow at which the oxygen partial pressure is reduced in accordance with examples of the present disclosure includes other ingredients as those found in the cathode exhaust flow and the inert gas e.g. water vapor. The cathode exhaust flow may be filtered before it is supplied to the cathode inlet line to remove impurities.

In some examples, the cathode exhaust flow may be directed to only flow to the inert gas generating system 36, without the cathode exhaust flow being also flown towards the cathode inlet line 38. For example, the first cathode bypass valve 45, positioned at the point at which the cathode recirculation passage 42 is coupled to the cathode bypass loop 44, may be operated so as to direct the entirety of the cathode exhaust flow in cathode recirculation passage 42 to the cathode bypass loop 44. Thus, the air flow that is fed to the cathode 26 may be mixed only with the inert gas such as e.g., water vapor, whereby the oxygen partial pressure in the air flow decreases in accordance with the required increase in the power requested from the fuel cell system.

**FIG. 2B** illustrates an example of a fuel cell system 220 comprising a fuel cell unit 221 in which an inert gas generating system is configured to receive an air flow acquired from an outside environment. Thus, in this example, instead of the use of the cathode exhaust flow, the air flow is a source of oxygen for generating an inert gas by the inert gas generating system. The cathode exhaust flow may be delivered to a cathode inlet line when a power demand on the fuel cell system is reduced, and the air flow may be diverted to the inert gas generating system when a further reduction of power, of a greater magnitude, is required. When the inert gas is being generated, the cathode exhaust flow may continue to be delivered to the cathode inlet line to whereby reduce the oxygen partial pressure in the air flow in the cathode inlet line.

The fuel cell system 220 of FIG. 2B is generally similar to the fuel cell system 20a of FIG. 2A, and discussion of similar components, shown using similar numerical references, is not repeated in connection with FIG. 2B.

The fuel cell unit 221 of FIG. 2B comprises one or more fuel cell stacks, with a fuel cell stack 222 in FIG. 2B as an example of the stacks. The stack 222 comprises an anode or anode side 224 and a cathode or cathode side 226 separated by an electrolyte (not shown) such as e.g. a PEM sandwiched between the anode 224 and the cathode 226.

The anode or anode side 224 is configured to receive a hydrogen gas flow via an anode feed line 228 and to provide byproducts of operation of the anode side 224 to an anode outlet line 229 that is configured to lead the byproducts away from the anode side 224. The anode feed line 228 is configured to be in fluid communication with an anode inlet line 232 configured to supply the hydrogen gas flow to the anode side 224 and with an anode bypass line 234 that is configured to divert a portion of the hydrogen gas flow to an inert gas generating system 236. The inert gas generating system 236 may comprises a catalytic container, e.g. tank or box, comprising the catalytic material, e.g., a platinum (Pt) or Palladium (Pd) catalyst, which drives production of water and nitrogen when reacted with hydrogen and oxygen supplied to the container.

Residual hydrogen gas, not used up in the inert gas generating system 236, may be discharged from the inert gas generating system 336 via a hydrogen residual line 235. The anode feed line 228, the anode outlet line 229, the anode inlet line 232, the anode bypass line 234, and the hydrogen residual line 235 are shown as dotted lines in FIG. 2B.

The cathode side 226 is configured to receive air or an air flow e.g. from the ambient environment via a cathode inlet path or 238. The air may be pressurized by an air compressor 252 and cooled by a CAC 254. A humidifier 256 may also be present that is configured to humidify the air flow in the cathode inlet path, as shown in FIG. 2B.

. The cathode side 226 is configured to provide a cathode exhaust flow, generated as byproduct of the electrochemical reaction in the stack 222, via a cathode outlet path or line 240. The cathode outlet line 240 is fluidly coupled to a cathode recirculation loop or passage 242 configured to divert a portion of the cathode exhaust flow to the cathode inlet line 238. The cathode recirculation passage or loop 242 may also be referred to as an EGR loop or passage. A cathode outlet flow control valve 241, positioned at a point where the cathode recirculation passage 242 is coupled to the cathode outlet line 240, may be used to control a flow of the cathode exhaust flow from the cathode outlet line 240 to the cathode recirculation passage 242.

The cathode outlet line 240 may comprise a recirculation pump which may be similar to recirculation pump 46 shown in FIG. 2B. In some examples, as shown in FIG. 2B, the recirculation pump may be not present, because less power may be required to circulate the cathode exhaust flow through the cathode recirculation passage when a cathode bypass loop is absent.

As shown in FIG. 2B, the cathode recirculation passage 242 is coupled to the cathode inlet line 238 downstream of the humidifier 256. A downstream position or location, as used herein, refers to a position or location along a cathode inlet line that is closer to the cathode and is further way from the air compressor, in a direction of flow of the air in the cathode inlet line towards the cathode. An upstream position or location, as used herein, refers to a position or location along a cathode inlet line that is closer to the air compressor and is further away from the cathode, in a direction that is opposite to the direction in which the air flow is carried in the cathode inlet line towards the cathode.

A cathode inlet flow control valve 249, positioned at a point where the cathode recirculation passage 242 is coupled to the cathode inlet line 238, may be used to control a flow of the cathode exhaust flow from the cathode recirculation passage 242 to the cathode inlet line 238. At a reduced power demand from the fuel cell system 220, the valves 241 and 249 may be controlled to allow a portion of the cathode exhaust flow to be diverted from the cathode outlet line 240, through the cathode recirculation passage 242, and into the cathode inlet line 238.

In some examples, one or both of the cathode outlet line 240 and the cathode recirculation passage 242 may comprise a water separator or another similar component configured to extract water from the cathode exhaust flow.

As shown in FIG. 2B, the fuel cell system 220 comprises an air flow bypass line 264 in fluid communication with the cathode inlet line 238 wherein the air flow bypass line 264 is configured to divert a portion of the air flow from the cathode inlet line 238 to an inert gas generating system 236, in a direction shown schematically by an arrow 270. The air flow bypass line 264 is also configured to supply an inert gas produced by the inert gas generating system 236 to the cathode inlet line 238, as shown schematically by an arrow 272. Thus, a portion of the air flow bypass line 264 is configured to deliver or supply air to the inert gas generating system 236, and another portion of the air flow bypass line 264 is configured to deliver or supply the inert gas to the cathode inlet line 238. If a lower power is needed in the fuel cell system, an increased amount of the air flow is directed to flow through the catalyst of the inert gas generating system 236.

In this example, the air flow bypass line 264 is fluidly coupled to the cathode inlet line 238 at a point marked as A in FIG. 2B, upstream of the CAC 254 so that the ambient air, pressurized by an air compressor 252, is supplied as input to a catalyst of the inert gas generating system 236. A first air flow control valve 237, positioned at the point or coupling A between the cathode inlet line 238 and the air flow bypass line 264, is configured to control a flow of the ambient air to the air flow bypass line 264. In such implementation, when the air flow e.g. fresh air is by-passed to flow to the system 236 after the air compressor 252 and before the CAC 254, the air in the air flow will be at a much higher temperature as compared to the air that has passed through the CAC 254. In some scenarios, feeding the warmer air to the cathode may improve efficiency of the inert gas generating system 236 that would require lower external energy for operation than in cases when a colder air is fed to it.

As shown in FIG. 2B, the air flow bypass line 264 is also fluidly coupled to the cathode inlet line 238 at a point marked as B, downstream of the CAC 254, where the inert gas may be provided to the cathode inlet line 238. The flow of the inert gas into the cathode inlet line 238 may be controlled by a second air flow control valve 239 positioned at the point or coupling B between the cathode inlet line 238 and the air flow bypass line 264. The first and second air flow valves 237, 239 may be controlled, e.g. their degrees of opening may be controlled, to allow a portion of the air flow provided by the air compressor 252 to be directed to the air flow bypass line 264. This may occur when the oxygen partial pressure in the air flow to be supplied to the cathode 226 is required to be further reduced as the power demand from the fuel cell system 220 is further reduced.

It should be noted that, in some implementations, the air flow bypass line 264 may be coupled to the cathode inlet line 238, to supply the inert gas to the cathode inlet line 238, downstream of the humidifier 256. In such implementations, e.g., the point B may be located downstream of the humidifier 256, and a valve such as e.g. second air flow control valve 239 may be positioned downstream of the humidifier 256.

Furthermore, in some implementations, the air flow bypass line 264 may be coupled to the cathode inlet line 238, to receive air from the cathode inlet line 238, downstream of the CAC 254 and upstream of the humidifier 256 e.g. between the CAC 254 and the humidifier 256. Thus, a point corresponding to the point A shown in FIG. 2B may be positioned between the CAC 254 and the humidifier 256 rather than upstream of the CAC 254 as shown in FIG. 2B.

In some implementations, the air flow bypass line 264 may be coupled to the cathode inlet line 238, to receive air from the cathode inlet line 238, downstream of the humidifier 256. Thus, a point corresponding to the point A in FIG. 2B may be positioned downstream of the humidifier 256.

Furthermore, the point B shown in FIG. 2B, which marks a part of the cathode inlet line 238 at which the air flow bypass line 264 is coupled to the cathode inlet line 238, may be positioned in a position that is different from that shown in FIG. 2B, depending on a position of the point A. A person of skill in the art would understand how to implement the fuel cell system so that the air flow bypass line is coupled to the cathode inlet line at various locations along the cathode inlet line, and examples of such implementations are therefore not shown herein in detail.

The fuel cell system 220 also comprises a coolant system 258, shown with dashed lines, which is similar to coolant system 58 of FIG. 2A. The coolant system 258 comprises a coolant inlet line 260 and a coolant outlet line 262 shown with dashed lines.

Operation of the fuel cell system 220 may be controlled by a controller or control system such as e.g. control system 30 as shown in FIG. 2B. The fuel cell system 220 may be controlled in dependance on a requested power that is requested from the fuel cell system when the vehicle including the fuel cell system 220 is estimated to be operating or expected to be operating, in a near future, with a reduced power demand from the fuel cell system. The cathode exhaust flow may be recirculated to the cathode inlet line 238 and/or the inert gas generating system 236 may be controlled to generate an inert gas using a portion of the air flow and a portion of the hydrogen gas flow.

In implementations of a fuel cell system in accordance with examples of the present disclosure, a cathode recirculation passage may be coupled with the cathode inlet line in various locations along the cathode inlet line. Thus, referring back to FIG. 2A, the cathode recirculation passage 42 is coupled to the cathode inlet line 38 downstream from the humidifier 56 which is positioned downstream of the air compressor 52 and the CAC 54.

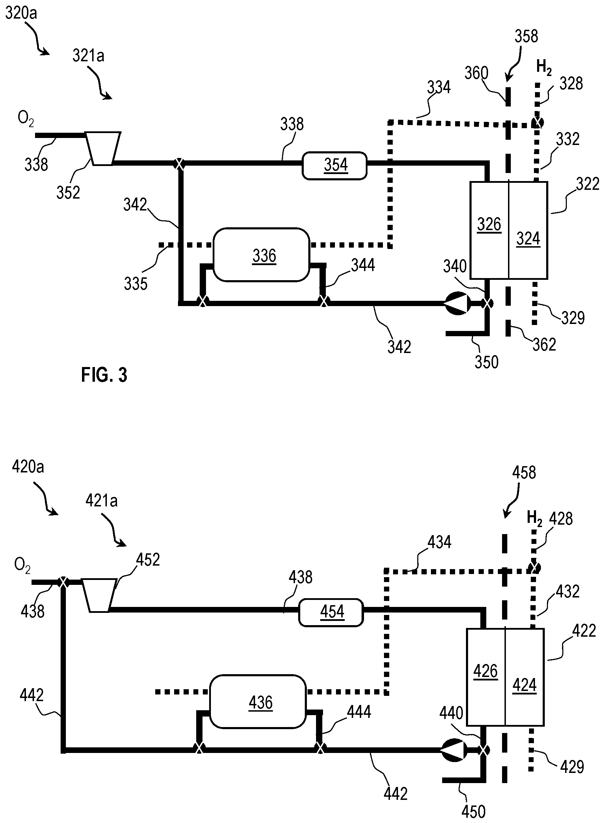

**FIGs. 3** and **4** illustrate examples of different locations at which the cathode recirculation passage of a fuel cell system may be coupled to a cathode inlet line configured to deliver a cathode inlet flow into the cathode. The fuel cell systems of FIGs. 3 and 4 are similar to the fuel cell system of FIG. 2A, and components of the fuel cell systems shown in FIGs. 3 and 4 are therefore not described in detail herein. Similar components are labeled with similar numerical references, and similar features e.g. valves and recirculation pumps, are shown using similar symbols. The valves are not labeled in FIGs. 3 and 4, and it should be understood that they are controlled in dependence on a requested power that is requested from the fuel cell system at a reduced power demand from the fuel cell system.

**FIG. 3** illustrates an example of a fuel cell system 320 comprising a fuel cell unit 321 that comprises one or more fuel cell stacks, with a fuel cell stack 322 shown in FIG. 3 as an example of the stacks. The stack 322 comprises an anode or anode side 324 and a cathode or cathode side 326 separated by an electrolyte (not shown)) such as e.g. a PEM sandwiched between the anode 324 and the cathode 326.

The anode or anode side 324 is configured to receive a hydrogen gas flow via an anode feed line 328 and to provide byproducts of operation of the anode side 324 to an anode outlet line 329 that is configured to lead the byproducts away from the anode side 324. The anode feed line 328 is configured to be in fluid communication with an anode inlet line 332 configured to supply the hydrogen gas flow to the anode side 324 and with an anode bypass line 334 that is configured to divert a portion of the hydrogen gas flow to an inert gas generating system 336. Residual hydrogen gas, not used up in the inert gas generating system 336, may be discharged from the inert gas generating system 336 via a hydrogen residual line 335. The anode feed line 328, the anode outlet line 329, the anode inlet line 332, the anode bypass line 334, and the hydrogen residual line 335 are shown as dotted lines in FIG. 3.

The cathode side 326 is configured to receive air or an air flow e.g. from the ambient environment via a cathode inlet line 338. The cathode side 326 is configured to provide a cathode exhaust flow via a cathode outlet path or line 340. The cathode outlet line 340 is fluidly coupled to a cathode recirculation passage or loop 342 configured to divert a portion of the cathode exhaust flow to the cathode inlet line 338. The cathode recirculation passage or loop 342 may also be referred to as an exhaust gas recirculation (EGR) loop or passage. As shown in FIG. 3, the cathode recirculation passage 342 is coupled to the cathode inlet line 338 downstream of an air compressor 352 but upstream of a CAC 354. A humidifier may also be present and it may be positioned downstream of the CAC 354.

In some examples, one or both of the cathode outlet line 340 and the cathode recirculation passage 342 may comprise a water separator or another similar component configured to extract water from the cathode exhaust flow.

The fuel cell system 322 also comprises a cathode bypass passage or loop 344 configured to be in fluid communication with the cathode recirculation passage 342. The cathode bypass loop 344 is configured to divert a portion of the cathode exhaust flow to the inert gas generating system 336 and to provide the inert gas to the cathode recirculation passage 342 that carries the inert gas to the cathode inlet passage 338. The cathode inlet line 338, the cathode recirculation loop 342, the cathode bypass loop 344, and a cathode output line 350 are shown with solid lines in FIG. 3.

A coolant system 358 comprises a coolant inlet line 360 and a coolant outlet line 362 shown with dashed lines.

Operation of the fuel cell system 322 may be controlled by a controller or control system (not shown in FIG. 3) which may be similar to the control system 300. The fuel cell system 322 may be controlled in dependance on a requested power that is requested from the fuel cell system when the vehicle including the fuel cell system 322 is estimated to be operating or expected to be operating with a reduced power demand from the fuel cell system. The cathode exhaust flow may be recirculated to the cathode inlet line 338 and/or the inert gas generating system 336 may be controlled to generate an inert gas using a portion of the cathode exhaust flow and a portion of the hydrogen gas flow.

**FIG. 4** illustrates an example of a fuel cell system 420 comprising a fuel cell unit 421 that comprises one or more fuel cell stacks, with a fuel cell stack 422 shown in FIG. 4 as an example of the stacks. The stack 422 comprises an anode or anode side 424 and a cathode or cathode side 426.

The anode or anode side 424 is configured to receive a hydrogen gas flow via an anode feed line 428 and to provide byproducts of operation of the anode side 424 to an anode outlet line 429 that is configured to lead the byproducts away from the anode side 424. The anode feed line 428 is configured to be in fluid communication with an anode inlet line 432 configured to supply the hydrogen gas flow to the anode side 424 and with an anode bypass line 434 that is configured to divert a portion of the hydrogen gas flow to an inert gas generating system 436. Residual hydrogen gas, not used up in the inert gas generating system 436, may be discharged from the inert gas generating system 436 via a hydrogen residual line 435. The anode feed line 428, the anode outlet line 429, the anode inlet line 432, the anode bypass line 434, and the hydrogen residual line 435 are shown as dotted lines in FIG. 4.

The cathode side 426 is configured to receive air or an air flow e.g. from the ambient environment via a cathode inlet path or line 438. The cathode side 426 is configured to provide a cathode exhaust flow via a cathode outlet path or line 440. The cathode outlet line 440 is fluidly coupled to a cathode recirculation passage or loop 442 configured to divert a portion of the cathode exhaust flow to the cathode inlet line 438. As shown in FIG. 4, the cathode recirculation passage 442 is coupled to the cathode inlet line 438 upstream of the air compressor 452. A CAC 354 is positioned downstream of the air compressor 452. A humidifier may also be present downstream of the CAC 454.

The fuel cell system 420 also comprises a cathode bypass passage or loop 444 configured to be in fluid communication with the cathode recirculation passage 442. The cathode bypass loop 444 is configured to divert a portion of the cathode exhaust flow to the inert gas generating system 436 and to provide the inert gas to the cathode recirculation passage 442 that carries the inert gas to the cathode inlet passage 438. The cathode inlet line 438, the cathode recirculation loop 442, the cathode bypass loop 444, and a cathode output line 450 are shown with solid lines in FIG. 4.

A coolant system 458 comprises a coolant inlet line and a coolant outlet line shown with dashed lines.

Operation of the fuel cell system 420 may be controlled by a controller or control system (not shown in FIG. 4) which may be similar to the control system 30 of FIG. 1 and FIGs. 2A and 2B. The fuel cell system 420 may be controlled in dependance on a requested power that is requested from the fuel cell system when the vehicle including the fuel cell system 420 is estimated to be operating or expected to be operating with a reduced power demand from the fuel cell system. The cathode exhaust flow may be recirculated to the cathode inlet line 438 and/or the inert gas generating system 436 may be controlled to generate an inert gas using a portion of the cathode exhaust flow and a portion of the hydrogen gas flow.

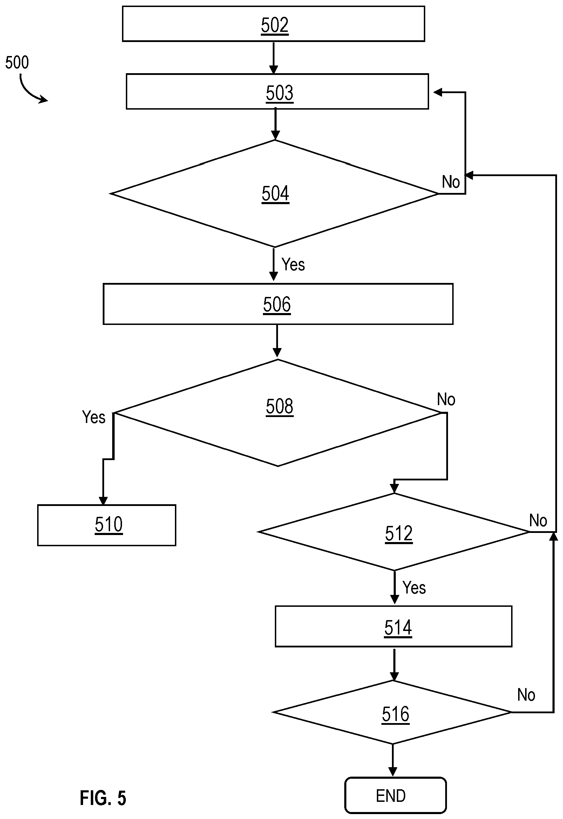

**FIG. 5** illustrates an example a process or method 500 for operating a fuel cell system for a vehicle, the fuel cell system comprising a fuel cell unit that comprises a fuel cell stack comprising a cathode side configured to receive an air flow and to provide a cathode exhaust flow, and an anode side configured to receive a hydrogen gas flow. The fuel cell system may be fuel cell system 20 of FIG. 1, or fuel cell system 20a (FIG. 2A), or fuel cell system 220 (FIG. 2B), or fuel cell system 320 (FIG. 3), or a fuel cell system 420 (FIG. 4), or a fuel cell system having another configuration. The fuel cell system may be deployed in a fuel cell vehicle e.g. vehicle 10 of FIG. 1. The fuel cell system comprises a cathode recirculation passage and an inert gas generating system which are controlled to supply a cathode exhaust flow and an inert gas, respectively, to an inlet of the cathode side, to reduce an oxygen partial pressure in an air flow fed to the cathode side.

The method 500 may be performed by a controller or control system, e.g., control system 30 of FIGs. 1, 2A, and 2B. The processing circuitry 32 of the control system 30 may execute computer-executable instructions stored e.g. in memory 31 of the control system 30, wherein the computer-executable instructions, when executed, cause the processing circuitry to perform the method 500.

The process 502 may begin at any suitable time, for example, as the power output from the fuel cell system reduces. It should be appreciated that the process 502 may be performed as part of an overall control of operation if the fuel cell system and some of the processing, e.g., acquiring values of a power output and/or monitoring a status of the vehicle, may be performed continuously, regardless of whether or not the vehicle is operating in a low power mode.

At **block 502,** the control system may obtain or acquire a value of a power output, also referred to as a requested power, that is requested from the fuel cell system as the vehicle is operating. The value of the power output may be a requested power that is currently requested from the fuel cell system as the vehicle operates. In some examples, the value of the power output may be a predicted value of the power that is expected to be requested from the fuel cell system. For example, for the fuel cell vehicle traveling a route, the control system may predict that the vehicle is approaching a descending part of the route where the vehicle will be traveling downhill. Depending on the steepness of the hill, a length of the descending part, and other factors, e.g, a weight of the vehicle, which may be carrying a load, the upcoming decrease in power demand from the fuel cell system may be predicted or estimated. The decrease in the power demand indicates that one or more lower values of a power output are expected to be requested from the fuel cell system.

As another example, the control system may predict that the vehicle is expected to enter an idle mode at which one or more lower values of a power output are expected to be requested from the fuel cell system.

The value of the power output that is requested from the fuel cell system of the vehicle may comprise multiple values that are acquired as the vehicle is operating.

At optional **block 503,** the single cell voltage of the fuel cell stack of the fuel cell unit of the fuel cell system may be monitored. A single cell voltage of the fuel cell stack may be determined using measurements acquired by e.g. a voltage sensor. In some examples, the single cell voltage of the fuel cell stack may be determined as a measured voltage of the fuel cell stack divided by a number of fuel cells in the fuel cell stack. Thus, the single cell voltage may be determined as an average single cell voltage and it represents a voltage of each fuel cell in each fuel cell stack, and this is the voltage whose value is not to exceed a safety threshold. In some examples, the single cell voltage may be determined from a measured voltage of the entire fuel cell unit, in which case this measured voltage is divided by the number of stacks and the number of cells in each stack. In some examples, a voltage of each fuel cell is measured and an average value of these measured voltages may be taken as the single cell voltage of the fuel cell stack. Regardless of the way in which the single cell voltage of the fuel cell stack is measured, the fuel cell system is controlled so that the single cell voltage does not exceed 0.8V or 0.79V as in some examples of the present disclosure.

It should be appreciated that the processing at block 503 may be performed continuously, as the fuel cell system is operating. Also, the processing at block 503 may be performed simultaneously with other processing acts or actions shown in FIG. 5.

At **block 504,** the control system determines whether the fuel cell system has been or will be operating with a reduced power demand from the fuel cell system for a period of time that is longer than a threshold period of time.

A status of the vehicle may be monitored, which may be done by the control system and/or by another controller e.g. a vehicle main controller that is communicatively coupled to the fuel cell system control system. Also, various information related to a current, past, and/or predicted status of the vehicle may be acquired.

The power demand from the fuel cell system may be reduced when it is detected that the vehicle is slowing down and/or when it comes to an idling stop i.e. a stop when the vehicle is operating in a low power mode. In some examples, the vehicle may be in an idle mode when it is determined that the fuel cell system has been or will be operating with the reduced power demand for the period of time that is longer than the threshold period of time. The vehicle may enter the idle mode as the vehicle is, or preparing for a braking event, when facing a traffic condition and so on.

The control system may detect that the vehicle is currently operating with the reduced power demand from the fuel cell system and that this has been happening for the period of time that is longer than the threshold period of time. Values of the power output that is requested from the fuel cell system may be acquired, at block 502, and the power output values may be used to determine that the fuel cell system has been operating with a reduced power demand, or in other words a load on the fuel cell system has been reducing,

In some examples, the control system may determine or predict or estimate that the vehicle is about to enter a mode or state in which the power demand from the vehicle's fuel cell system will be reduced. For example, the vehicle may be traveling a route e.g. as part of a mission or task assigned to the vehicle, and the control system may predict, based on information on the route and information on the vehicle, that the vehicle is expected to operate with the reduced power demand from the fuel cell system. The control system may store and/or may acquire information about prior driving history of a driver of the vehicle, one or more routes traveled by the vehicle including stops made by the vehicle at certain locations, information on current and predicted ambient conditions, traffic information including roadblocks and congestions, and/or any other information that may be used to predict that the vehicle is about to enter a lower power mode e.g. an idle mode. The vehicle may operate as part of a vehicle fleet in some examples, and a mission or task assigned to the vehicle may have a start point and an end point, and information about the route between the start and end points, as well as surrounding circumstances and driver's behavior, may be used to predict when the vehicle is expected to enter the low power mode. The control system may thus begin to preemptively prepare the fuel cell system in anticipation of the vehicle low power mode in which the power demand by the vehicle from the fuel cell system will be reduced.

It should be noted that the processing at block 504 may comprise the processing at block 502, or the processing at blocks 502, 504 may be performed as part of a same processing. Thus, as the values of power output, requested or to be requested from the fuel cell system, are acquired, the control system may determine that these values are indicating a reduced power demand from the fuel cell system and that the reduced power demand has been detected or is expected to be occurring for the period of time that is longer than the threshold period of time.

The threshold period of time may be a period of time during which the ESS, e.g. one or more batteries, of the vehicle becomes fully charged or close to being fully charged, such that it may not accept an excess power that may be produced by the fuel cell system as a load on the fuel cell system decreases e.g. as the vehicle is decelerating or enters an idle mode. The threshold period of time may be set in dependance on a charge state and charging capacity of the ESS, and other factors. In some examples, the threshold period of time may be set dynamically, such that it is selected based on a current charge state of the ESS. In any case, the threshold period of time may be selected to account for the fact that the idling and low power operation event may occur for a duration that is long enough to fill the ESS such that it may be required to handle the excess power or energy produced by the fuel cell system in some other way. For example, the excess power will need to be dissipated to the ambient environment or the fuel cell system may even need to be shut down. To avoid these options, both of which are not desirable, the method in accordance with examples of the present disclosure involves intentionally reducing the efficiency of the fuel cell system. Thus, the power produced by the fuel cell system may be reduced to lower values, without a risk of the single cell voltage increasing to values at which stack degradation may occur. Thus, the durability and the lifetime of the stacks and the entire fuel cell system may increase. As another advantage, a more stable control of a fuel cell net power may be achieved.

At **block 506,** the control system, responsive to determining that the vehicle has been or will be operating with the reduced power demand from the fuel cell system, may compare the value of the power output that is requested from the fuel cell system to at least one threshold power level. The value of the requested power may be compared to one or more threshold power level to determine whether the power demand from the fuel cell system is sufficiently low to require reducing an oxygen partial pressure in a cathode inlet flow fed to the cathode, to thereby reduce the efficiency of the fuel cell system.

At **block 508,** the control system may determine whether the value of the power output is below the at least one threshold power level comprising a first threshold power level and above the at least one threshold power level comprising a second threshold power level, wherein the second threshold power level is below the first threshold power level. In other words, it may be determined whether the value of the power output is between the second and first threshold power levels.

In some examples, the value of the requested power output may be below the first threshold power level but above the second threshold power level that is below the first threshold power. Thus, to allow the power output of the fuel cell system be reduced to a desired lower value, it may be sufficient to supply a portion of the cathode exhaust flow to the cathode inlet line. If the value of the requested power output reduces further, e.g. to a value that is below the second threshold power level, oxygen partial pressure in the air flow fed to the cathode will need to be further reduced accordingly, as discussed below.

The first threshold power level may be e.g., about 60kW. In some examples, the first threshold power level may vary within a range of from about 60kW to about 75kW, or from about 60kW to about 70kW. The second threshold power level may be, e.g., about 50kW, or about 40kW, or about 30kW, or about 20kW. In some examples, the second threshold power level may comprise more than one values such that the value of the requested power output may be compared to more than one value of the second threshold power level. The and second first threshold power levels may comprise other values as examples of the present disclosure are not limited in this respect.

At **block 510,** the control system, responsive to determining that the value of the power output is below the at least one threshold power level comprising the first threshold power level and above the second threshold power level that is below the first threshold power level, decreases an oxygen partial pressure of the air flow in a cathode inlet line configured to supply the air flow to the cathode, by diverting a portion of the cathode exhaust flow into the cathode inlet line.

The cathode exhaust flow has a low concentration of oxygen, as the oxygen in the air flow as supplied at the input of the cathode has been already consumed in the fuel cell stack. Thus, mixing the air flow with the air flow in a cathode inlet line reduces the oxygen partial pressure of the air flow in the cathode inlet line. In the cathode exhaust flow, the water may be mostly in a vapor phase.

Examples of controlling the fuel cell system so as to divert a portion of the cathode exhaust flow into the cathode inlet line are described in connection with FIGs. 2A, 2B, 3 and 4. For example, with reference to FIG. 2A, a portion of the cathode exhaust flow may be diverted, via cathode recirculation passage 42, to the cathode inlet line 38. Similarly, with reference to FIG. 2B, a portion of the cathode exhaust flow may be diverted, via cathode recirculation passage 242, to the cathode inlet line 238.

An amount of the cathode exhaust flow that is diverted to the cathode inlet line depends on a desired reduction in the oxygen partial pressure in the air flow transported through the cathode inlet line from an air source, e.g., the ambient air, to the cathode inlet. The control may be performed by controlling a degree of opening of one or more valves configured to control a flow of the cathode exhaust flow, via a cathode recirculation passage, into the cathode inlet line. As the air flow is mixed with the cathode exhaust flow, the oxygen partial pressure in the air flow reduces. The oxygen partial pressure in the air flow is reduced in dependence on the requested power.

At **block 512,** the control system, responsive to determining that the value of the power output requested from the fuel cell system is not between the second and first threshold power levels, determines whether the value of the power output is below the at least one threshold power level comprising the second threshold power level.

Responsive to determining that the value of the power output is not below the at least one threshold power level comprising the second threshold power level, the process 500 may return to block 502 where another value of the power output may be acquired.

At **block 514,** the control system, responsive to determining that the value of the power output requested from the fuel cell system is between the second and first threshold power levels i.e. the value of the power output is below the at least one threshold power level comprising the second threshold power level, decreases the oxygen partial pressure of the air flow in the cathode inlet line by controlling an inert gas generating system of the fuel cell system to generate an inert gas that is supplied into the cathode inlet line to thereby further decrease the oxygen partial pressure of the air flow in the cathode inlet line.

A catalyst in the inert gas generating system may be configured to produce water, mainly in the vapor phase. Supplying the vapor to the cathode inlet line may further decrease the oxygen partial pressure of the air flow in the cathode inlet line. The inert gas, in the form of a vapor, may allow reducing the oxygen partial pressure of the air flow to lower values then when the portion of the cathode exhaust flow is supplied to the air flow in the cathode inlet line. Thus, a greater reduction of the oxygen partial pressure may be achieved.

In some examples, the value of the requested power output may be low enough such that it is below the second threshold power level that is below the first threshold power level. For example, the vehicle may be slowing down abruptly and the value of the requested power may reduce quickly to a value that is below the second threshold power. In some examples, the value of the power output requested from the fuel cell system may reduce slower, such that the value of the power output may first decrease to below the first threshold power level but above the second threshold power level, and then further decrease to be below the second threshold power level which may comprise one or more values. As an example, a value of the power output may first decrease to below the first threshold power level which may be 60KW or a value that is greater than 60kW, then decrease to below 40KW and then to below 30 KW, where the second threshold power comprises two second threshold power levels - 40kW and 30kW. As another example, the second threshold power may comprise 40kW, or 30kW, or 20kW, or other suitable values.

In some circumstances, the value of the power output requested from the fuel cell system does not decrease to become lower than the second threshold power level.

The control system may control the fuel cell system to decrease the oxygen partial pressure of the air flow in the cathode inlet line by controlling an inert gas generating system of the fuel cell system to generate an inert gas that is supplied into the cathode inlet line which delivers the air flow, mixed with the inert gas, to the cathode.

In some examples, the cathode exhaust flow may also be diverted to the cathode inlet line such that both a portion of the cathode exhaust flow and the inert gas are supplied to the cathode inlet line. In some examples, only the inert gas is supplied to the cathode inlet line.

When the value of the power output requested from the fuel cell system is lower, or smaller than the second threshold power level, this indicates that a further reduction in the oxygen partial pressure in the cathode air flow may be required, in accordance with examples of the present disclosure. The oxygen partial pressure in the air flow is reduced in dependence on the requested power.

The second threshold power or power level may comprise more than one threshold power level such that the value of the requested power may be compared to more than one value of the second threshold power. In some examples, the value of the requested power requested from the fuel cell system may first decrease to below the first threshold power but above the second threshold power, and then further decrease to or below the second threshold power which may comprise one or more values. As an example, a value of the requested power may first decrease to below the first threshold power which may be 60KW or a value that is greater than 60kW, then decrease to below 40KW and then to below 30 KW, where the second threshold power comprises two second threshold power levels - 40kW and 30kW. The second threshold power may have any other values below the first threshold power. For example, the second threshold power may comprise 40kW, or 30kW, or 20kW, or other suitable values.

It should be noted that a specific value, or a range of values, of the first threshold power and one or more values of the second threshold power may depend on properties of the fuel cell unit and the entire fuel cell system that may comprise one or more fuel cell units. In some examples in accordance with aspects of the present disclosure, the fuel cell system comprises one i.e. single fuel cell unit of a high or higher efficiency.

In some examples, controlling the inert gas generating system to generate the inert gas comprises diverting a portion of the cathode exhaust flow, provided by the cathode side to a cathode outlet line, into the inert gas generating system and diverting a portion of a hydrogen gas to the inert gas generating system. The portion of the cathode exhaust flow may be diverted to the inert gas generating system via a cathode bypass loop configured to be fluidly coupled to the cathode recirculation loop. The cathode bypass loop may be controlled to divert the portion of the cathode exhaust flow to the inert gas generating system, as discussed e.g. in connection with FIGs. 2A, 3, and 4. The portion of the hydrogen gas may be diverted to the inert gas generating system via an anode bypass line configured to be fluidly coupled to an anode feed line. The anode bypass path may be controlled to divert the portion of the hydrogen gas flow to inert gas generating system, as discussed e.g. in connection with FIGs. 2A, 2B, 3, and 4.

In some examples, additionally, the cathode recirculation loop may be controlled to divert a portion of the cathode exhaust flow into the cathode inlet line.

In some examples, controlling the inert gas generating system to generate the inert gas comprises, responsive to the requested power being below the second threshold power, controlling an air flow bypass line of the fuel cell system to divert the portion of the air flow to the inert gas generating system and controlling the anode bypass path to divert the portion of the hydrogen gas flow to the inert gas generating system so that the inert gas generating system generates a controlled amount of the inert gas in dependence on the requested power. For example, as shown in FIG. 2B, the air flow may be diverted, via air flow bypass line 264, to inert gas generating system 236, and inert gas generating system 236 generates the inert gas based on the rate and amount of the air flow and hydrogen diverted to the inert gas generating system 236.

As the value of the requested power output continues to decrease, the fuel cell system and/or the inert gas generating system may be controlled to continue operating so that the inert gas generating system generates the inert gas that may be supplied to the air flow fed to the cathode. An amount and flow rate of the hydrogen gas flow, as well as an amount and flow rate of the cathode exhaust flow or an air flow may be adjusted to thereby control production of the inert gas by the inert gas generating system.

In some cases, the value of the requested power output may remain relatively steady, such that the inert gas may be generated with a relatively constant rate, such as without an increase. In any case, the fuel cell system may be controlled to supply to the inert gas generating system required reactants and the inert gas generating system may generate the water vapor in a controller manner, in dependance on the power requested from the fuel cell system. Although not shown explicitly in FIG. 5, the value of the power output requested from the fuel cell system may be acquired continuously, e.g. as the vehicle is operating in the idle mode or is otherwise in a low power mode.

At **block 516,** the control system may optionally determine whether the value of the power output that is requested from the fuel cell system is further decreasing. If this is the case, the process 500 may return to block 514 to continue decreasing the oxygen partial pressure of the air flow in the cathode inlet line.

Responsive to determining that the value of the power output is not decreasing further, the process 500 may end, as shown in FIG. 5. However, it should be appreciated that the process 500 may be performed continuously, as the fuel cell system is operating. For example, as the load on the fuel cell system increases, the process 500 may return back to block 502 where one or more subsequent values of the requested power output may be obtained or acquired.

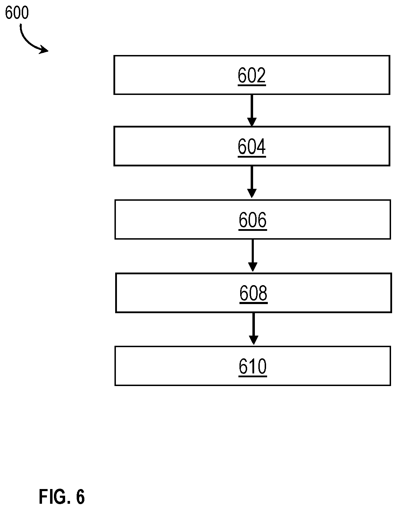

**FIG. 6** illustrates an example of a process 600 that may be performed as the value of the power output requested from the fuel cell system increases. The fuel cell system may be fuel cell system 20 of FIG. 1, or fuel cell system 20a (FIG. 2A), or fuel cell system 220 (FIG. 2B), or fuel cell system 320 (FIG. 3), or a fuel cell system 420 (FIG. 4), a fuel cell system having another configuration. The fuel cell system may be deployed in a fuel cell vehicle e.g. vehicle 10 of FIG. 1.

For example, the load on the fuel cell system may increase as the vehicle exits the idle mode or a low power mode. For example, the vehicle may begin accelerating, or the vehicle may begin moving after being idle for a certain amount of time.

The process 600 may be performed by the control system 30. As the fuel cell system is operating, e.g., as the vehicle is traveling a route and the load on the fuel cell system varies such that a power demand from the fuel cell system varies, the control system 30 may perform the processing in accordance with the process 500 of FIG. 5 as the power demand decreases, and the processing in accordance with the process 600 of FIG. 6 as the power demand increases which may occur after the decrease in the power demand.

At **block 602,** the control system may obtain or acquire or receive a value of a power output, also referred to as a requested power, that is requested from the fuel cell system as the vehicle is operating. The value of the power output may be a requested power that is currently requested from the fuel cell system as the vehicle operates. In some examples, the value of the power output may be a predicted value of the power that is expected to be requested from the fuel cell system. It should be noted that the processing at block 602 may be performed as part of the processing at block 502 in FIG. 5, as the processes 500 and 600 may be performed as part of a coordinated control of operation of the fuel cell system.

At **block 604,** the control system may determine that the fuel cell system is no longer operating with the reduced power demand and the requested power is greater than the at least one threshold power level. This may be determined based on the acquired values of the power output requested from the fuel cell system. The at least one threshold power level may be, e.g., the second threshold power level as described in connection with FIG. 5. However, in some examples, the at least one threshold power level may have values different from the second threshold power level. In other words, the control of the fuel cell system when the power demand on it increase does not need to be based on the same threshold levels as those used to control the fuel cell system as the power demand on it reduces.

At **block 606,** the control system, responsive to determining that the requested power is greater than the at least one threshold power level, may control the inert gas generating system to supply a reduced amount of the inert gas to the cathode inlet line, control the cathode bypass loop to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the catalyst system.

As discussed above, the inert gas generating system may receive either a portion of the cathode exhaust flow or a portion of the air flow as a source of oxygen for the catalyst of the inert gas generating system. Thus, in some examples, as shown e.g. in FIG. 2A, the fuel cell system may be controlled such that the cathode bypass loop is controlled to divert a reduced amount of the cathode exhaust flow to the inert gas generating system. In some examples, as shown e.g. in FIG. 2B, the fuel cell system may be controlled such that the airflow bypass line is controlled to divert a reduced amount of the air flow to the inert gas generating system.

At **block 608,** as the requested power output is reducing further, as the inert gas generating system ceases supplying the inert gas to the cathode inlet line, the control system may control the cathode bypass loop to cease diverting the cathode exhaust flow to the inert gas generating system or control the anode bypass path to cease diverting the hydrogen gas flow to the inert gas generating system. The further reduction in the requested power output may be detected based on monitored values of the power output requested from the fuel cell system. The values of the power output may also be compared to at least one threshold power level.

In some examples, as shown e.g. in FIG. 2A, the fuel cell system may be controlled such that the cathode bypass loop is controlled to cease diverting the cathode exhaust flow to the inert gas generating system. In some examples, as shown e.g. in FIG. 2B, the fuel cell system may be controlled such that the airflow bypass line is controlled to cease diverting the air flow to the inert gas generating system.

At **block 610,** the control system may control the cathode recirculation passage to gradually cease diverting the cathode exhaust flow into the cathode inlet line. As mentioned above, the cathode recirculation passage may divert a portion of the cathode exhaust flow as the inert gas is generated and supplied to the cathode inlet line. In such examples, the flow of the cathode exhaust into the cathode inlet line may be gradually reduced until it is stopped completely.

In some cases, the cathode exhaust flow may not be provided to the cathode inlet line in addition to the inert gas.

The process 600 may be performed as the power demand on the fuel cell system increases until, e.g. the fuel cell system returns to the normal operating condition. Values of the power output requested from the fuel cell system may continue to be acquired, and a vehicle status may be monitored, to determine whether and then the fuel cell system may again require a reduction in the oxygen partial pressure in the air flow supplied to the cathode when the power demand on the fuel cell system decreases.

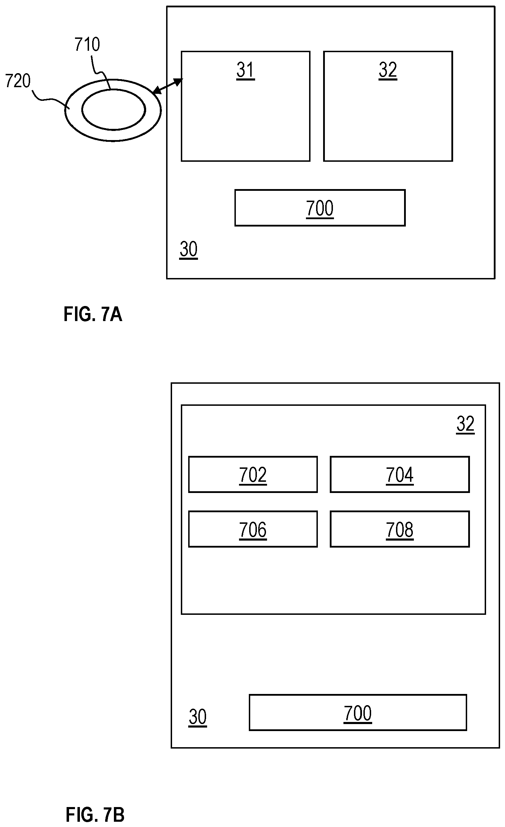

To perform the method steps described herein, the control system 30 may be configured to perform the processing described in connection with FIGs. 5 and 6 and/or any other examples in accordance with the present disclosure. The control system 30, as shown e.g. in FIGs. 2A and 2B, may, for example, comprise an arrangement as depicted in **FIGs. 7A** and **7B**. The control system 30 may be positioned in any suitable location of the vehicle 10 or another system in which methods in accordance with aspects of the present disclosure are implemented.

As shown in **FIG. 7A****,** the control system 30 comprises processing circuitry 32, memory 31, and an input and output interface 700 configured to communicate with any necessary components and/or entities of examples herein. The input and output interface 700 may comprise a wireless and/or wired receiver and a wireless and/or wired transmitter. In some examples, the input and output interface 700 may comprise a wireless and/or wired transceiver. The control system 30 may use the input and output interface 700 to control and communicate with various sensors, actuators, subsystems, and/or interfaces of the fuel cell system and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 32 of the control system 30, together with computer program code stored in a computer-readable storage medium for performing the functions and actions of the examples herein.

The memory 31 may comprise one or more memory units. The memory 31 comprises computer-executable instructions executable by the processing circuitry 32 of the control system 30. The memory 31 is configured to store, e.g., information, data, etc., and the computer-executable instructions to perform, when executed by the processing circuitry 32, the methods in accordance with examples herein. The control system 30 may additionally obtain information from an external memory.

The methods according to the aspects of the present disclosure may be implemented by e.g. a computer program product 710 or a computer program, comprising computer-executable instructions, i.e., software code portions, which, when executed on at least one processor, e.g., the processing circuitry 32, cause the at least one processor to carry out the actions described herein, as performed by the control system 30.

In some examples, the computer program product 710 is stored on a computer-readable storage medium 720. The computer-readable storage medium 720 may be, e.g., a disc, a universal serial bus (USB) stick, or similar device. The computer-readable storage medium 720, having stored thereon the computer program product, may comprise computer-executable instructions which, when executed by the processing circuitry 32, cause the processing circuitry 32 to perform the actions of the methods in accordance with examples of the present disclosure described herein, as performed by the control system 30.

As shown in **FIG. 7B**, the control system 30 may comprise an **obtaining unit 702.** The control unit system 30, the processing circuitry 32, and/or the obtaining unit 702 may be configured to obtain or acquire a value of a power output, also referred to as a requested power, that is requested from the fuel cell system as the vehicle is operating.

The control system 30 may comprise a **monitoring unit 704.** The control unit system 30, the processing circuitry 32, and/or the monitoring unit 704 may be configured to monitor a single cell voltage as discussed e.g. in connection with block 503 of FIG. 5.

As shown in FIG. 7B, the control system 30 may comprise a **determining unit 706.** The control system 30, the processing circuitry 32, and/or the determining unit 706 may be configured to estimate or determine or whether the fuel cell system has been or will be operating with a reduced power demand from the fuel cell system for a period of time that is longer than a threshold period of time, as discussed e.g. in connection with block 504 of FIG. 5.

The control system 30, the processing circuitry 32, and/or the determining unit 706 are configured to estimate or determine or whether the fuel cell system has been or will be operating with a reduced power demand from the fuel cell system for a period of time that is longer than a threshold period of time, as discussed e.g. in connection with block 504 of FIG. 5.

The control system 30, the processing circuitry 32, and/or the determining unit 706 may be configured to compare the value of the power output that is requested from the fuel cell system to at least one threshold power level, as discussed e.g. in connection with block 506 of FIG. 5.

The control system 30, the processing circuitry 32, and/or the determining unit 706 are configured to determine whether the value of the power output is below the at least one threshold power level comprising a first threshold power level and above the at least one threshold power level comprising a second threshold power level, wherein the second threshold power level is below the first threshold power level. In other words, it may be determined whether the value of the power output is between the second and first threshold power levels, as discussed e.g. in connection with block 508 of FIG. 5.

As further shown in FIG. 7B, the control system 30 may comprise a **controlling unit 708.** The control system 30, the processing circuitry 32, and/or the controlling unit 708 may be configured to, responsive to determining that the value of the power output is below the at least one threshold power level comprising the first threshold power level and above the second threshold power level that is below the first threshold power level, decrease an oxygen partial pressure of the air flow in a cathode inlet line configured to supply the air flow to the cathode, by diverting a portion of the cathode exhaust flow into the cathode inlet line. An example of such processing is described e.g. in connection with block 510 of FIG. 5.

The control system 30, the processing circuitry 32, and/or the controlling unit 708 may further be configured to, responsive to determining that the value of the power output requested from the fuel cell system is not between the second and first threshold power levels, determine whether the value of the power output is below the at least one threshold power level comprising the second threshold power level.

The control system 30, the processing circuitry 32, and/or the controlling unit 708 are configured to, responsive to determining that the value of the power output requested from the fuel cell system is between the second and first threshold power levels i.e. the value of the power output is below the at least one threshold power level comprising the second threshold power level, decrease the oxygen partial pressure of the air flow in the cathode inlet line by controlling an inert gas generating system of the fuel cell system to generate an inert gas that is supplied into the cathode inlet line to thereby further decrease the oxygen partial pressure of the air flow in the cathode inlet line. An example of such processing is described e.g. in connection with block 514 of FIG. 5.

The control system 30 may be configured to perform the process 600 shown in FIG. 6. Thus, the control system 30, the processing circuitry 32, and/or the determining unit 706 may be configured to determine that the fuel cell system is no longer operating with the reduced power demand and the value of the power output requested from the fuel cell system is greater than the at least one threshold power, as shown e.g. in connection with block 604 of FIG. 6. The control system 30, the processing circuitry 32, and/or the controlling unit 708 may be configured to, responsive to determining that the value of the power output is greater than the at least one threshold power, control the inert gas generating system to supply a reduced amount of the inert gas to the cathode inlet line, control the cathode bypass line to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the inert gas generating system; and, as the value of the power output is reducing further, and as the inert gas generating system ceases supplying the inert gas to the cathode inlet line, control the cathode bypass line to cease diverting the cathode exhaust flow to the catalyst system and control the anode bypass path to cease diverting the hydrogen gas flow to the inert gas generating system.

In some examples, the control system 30, the processing circuitry 32, and/or the controlling unit 708 may be configured to control the cathode recirculation passage to gradually cease diverting the cathode exhaust flow into the cathode inlet line.

The control system 30 and /or the processing circuitry 32 may comprise other units or sub-units configured to perform processing in accordance with examples of the present disclosure.

Those skilled in the art will appreciate that the units in the control system 30 described above may refer to a combination of analogue and digital circuits, and/or one or more processors configured with software and/or firmware, e.g., stored in the control system 30, that, when executed by the respective one or more processors, may perform the methods in accordance with embodiments of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machineexecutable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell system (20, 20a, 220, 320, 420) for a vehicle (10), the fuel cell system comprising:
at least one fuel cell unit (21, 221, 321, 421) comprising a fuel cell stack (22, 22a, 222, 322, 422) that comprises:
a cathode side (26, 226, 326, 426) configured to receive an air flow via a cathode inlet line and configured to provide a cathode exhaust flow via a cathode outlet line, the cathode outlet line being fluidly coupled to a cathode recirculation passage configured to divert a portion of the cathode exhaust flow to the cathode inlet line;
an inert gas generating system (36, 236, 336, 436) configured to generate inert gas that is supplied to the cathode inlet line;
an anode side (24, 224, 324, 424) configured to receive a hydrogen gas flow via an anode feed line, the anode feed line being configured to be in fluid communication with an anode inlet line configured to supply the hydrogen gas flow to the anode side and with an anode bypass line that is configured to divert a portion of the hydrogen gas flow to the inert gas generating system; and
a control system (30) comprising processing circuitry (32) that is configured to:
determine that the fuel cell system has been or will be operating with a reduced power demand from the fuel cell system for a period of time that is longer than a threshold period of time;
responsive to determining that the fuel cell system has been or will be operating with the reduced power demand, comparing a value of the power output that is requested from the fuel cell system to at least one threshold power level;
responsive to determining that the value of the power output is below the at least one threshold power level comprising a first threshold power level and above the at least one threshold power level comprising a second threshold power level, controlling the cathode recirculation passage to divert a portion of the cathode exhaust flow into the cathode inlet line; and
responsive to determining that the value of the power output is below the second threshold power level,
control a cathode bypass loop in fluid communication with the cathode recirculation passage to divert a portion of the cathode exhaust flow to the inert gas generating system or control an air flow bypass line in fluid communication with the cathode inlet line to divert a portion of the air flow to the inert gas generating system, and
control the anode bypass path to divert a portion of the hydrogen gas flow to the inert gas generating system to thereby cause the inert gas generating system to generate a controlled amount of the inert gas.

2. The fuel cell system of claim 1, wherein the fuel cell system is determined to have been or will be operating with the reduced power demand when the vehicle is in an idle mode.

3. The fuel cell system of claim 1 or 2, wherein the processing circuitry of the control system is configured to, responsive to determining that the value of the power output is below the second threshold power level, control the cathode bypass passage to divert the portion of the cathode exhaust flow to the inert gas generating system and control the anode bypass path to divert the portion of the hydrogen gas flow to the inert gas generating system whereby the inert gas generating system is caused to generate the controlled amount of the inert gas in dependence on the value of the power output.

4. The fuel cell system of claim 3, wherein the processing circuitry is further configured to control the cathode recirculation passage to divert a portion of the cathode exhaust flow into the cathode inlet line.

5. The fuel cell system of claim 1 or 2, wherein the processing circuitry is configured to, responsive to determining that the value of the power output is below the second threshold power level, control the air flow bypass line to divert the portion of the air flow to the inert gas generating system and control the anode bypass path to divert the portion of the hydrogen gas flow to the inert gas generating system whereby the inert gas generating system is caused to generate the controlled amount of the inert gas in dependence on the value of the power output.

6. The fuel cell system of any one of claims 1 to 5, wherein determining that the fuel cell system has been or will be operating with the reduced power demand for the period of time that is longer than the threshold period of time is performed in dependance on one or more features of a route traveled by the vehicle.

7. The fuel cell system of any one of claims 1 to 6, wherein the processing circuitry is configured to:
determine that the fuel cell system is no longer operating with the reduced power demand and the value of the power output requested from the fuel cell system is greater than the at least one threshold power;
responsive to determining that the value of the power output is greater than the at least one threshold power, control the inert gas generating system to supply a reduced amount of the inert gas to the cathode inlet line, control the cathode bypass line to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the inert gas generating system; and
as the value of the power output is reducing further, and as the inert gas generating system ceases supplying the inert gas to the cathode inlet line, control the cathode bypass line to cease diverting the cathode exhaust flow to the catalyst system and control the anode bypass path to cease diverting the hydrogen gas flow to the inert gas generating system.

8. The fuel cell system of claim 7, wherein the processing circuitry is further configured to
control the cathode recirculation passage to gradually cease diverting the cathode exhaust flow into the cathode inlet line.

9. A fuel cell vehicle (10) comprising a fuel cell system of any one of claims 1 to 8.

10. A method for operating a fuel cell system for a vehicle, the fuel cell system comprising at least one fuel cell unit comprising a fuel cell stack that comprises a cathode side configured to receive an air flow and to provide a cathode exhaust flow, and an anode side configured to receive a hydrogen gas flow, the method comprising:
determining (504) that the fuel cell system has been or will be operating with a reduced power demand from the fuel cell system for a period of time that is longer than a threshold period of time;
responsive to determining that the fuel cell system has been or will be operating with the reduced power demand, comparing (506) a value of the power output that is requested from the fuel cell system to at least one threshold power level;
responsive to determining that the value of the power output is below the at least one threshold power level comprising a first threshold power level and above the at least one threshold power level comprising a second threshold power level, decreasing (510) an oxygen partial pressure of the air flow in a cathode inlet line configured to supply the air flow to the cathode, by diverting a portion of the cathode exhaust flow into the cathode inlet line; and
responsive to determining that the value of the power output is below the second threshold power level, decreasing (514) the oxygen partial pressure of the air flow in the cathode inlet line by controlling an inert gas generating system of the fuel cell system to generate an inert gas that is supplied into the cathode inlet line to thereby further decrease the oxygen partial pressure of the air flow in the cathode inlet line.

11. The method of claim 10, wherein controlling the inert gas generating system to generate the inert gas comprises:
diverting a portion of the cathode exhaust flow to the inert gas generating system; and
diverting a portion of a hydrogen gas to the inert gas generating system.

12. The method of claim 10 or 11, comprising, responsive to determining that the value of the power output is below the second threshold power level, diverting a portion of the cathode exhaust flow into the cathode inlet line.

13. The method of claim 12, wherein controlling the inert gas generating system to generate the inert gas comprises:
diverting a portion of the air flow to the inert gas generating system; and
diverting a portion of a hydrogen gas to the catalyst system.

14. The method of any one of claims 10 to 13, comprising:
determining (604) that the fuel cell system is no longer operating with the reduced power demand and the value of the power output requested from the fuel cell system is greater than the at least one threshold power;
responsive to determining that the value of the power output is greater than the at least one threshold power, controlling (606) the inert gas generating system to supply a reduced amount of the inert gas to the cathode inlet line, control the cathode bypass line to divert a reduced amount of the cathode exhaust flow to the inert gas generating system or control the airflow bypass line to divert a reduced amount of the air flow to the inert gas generating system, and control the anode bypass path to divert a reduced amount of the hydrogen gas flow to the inert gas generating system; and
as the value of the power output is reducing further, and as the inert gas generating system ceases supplying the inert gas to the cathode inlet line, controlling (608) the cathode bypass line to cease diverting the cathode exhaust flow to the catalyst system and control the anode bypass path to cease diverting the hydrogen gas flow to the inert gas generating system.

15. A control system (30) for controlling a fuel cell system (20, 20a, 220, 320, 420) of a fuel cell vehicle (10), the control system (30) comprising processing circuitry (32) configured to perform the method of any one of claims 11 to 14.
